Europäisches Patentamt

European Patent Office

Office européen des brevets

(11) Veröffentlichungsnummer: **0 320 611**

**A2**

# (12) EUROPÄISCHE PATENTANMELDUNG

(21) Anmeldenummer: 88118385.9

(22) Anmeldetag: 04.11.88

(51) Int. Cl.⁴: **B23Q 7/04 , B23K 7/10**

(30) Priorität: 12.12.87 DE 3742175

(43) Veröffentlichungstag der Anmeldung:
21.06.89 Patentblatt 89/25

(84) Benannte Vertragsstaaten:
AT BE CH ES FR GB IT LI NL SE

(71) Anmelder: Oxytechnik Ges. für Systemtechnik
mbH
Frankfurter Strasse 10
D-6236 Eschborn 1(DE)

(72) Erfinder: Lehmler, Hans-Friedrich
Ricarda-Huch-Strasse 40
D-6380 Bad Homburg v.d.H.(DE)
Erfinder: Lentz, Gerhard
In der Bitterwiese 13
D-6272 Niedernhausen 3(DE)

(74) Vertreter: Roesner, Werner
MESSER GRIESHEIM GmbH Patentabteilung
Lärchenstrasse 137 Postfach 83 00 48
D-6230 Frankfurt/Main 83(DE)

(54) **Einrichtung zum Schneiden von U-, T-, L-, I-, Flach- oder Wulstprofilen.**

(57) Die Erfindung betrifft eine Einrichtung zum Schneiden von U-, T-, L-, I-, Flach- oder Wulstprofilen (11) mit unterschiedlichen Abmessungen in einer Profilschneidstation.

Um mit nur einer Einrichtung lange oder kurze Profilteile im Bereich des Längsförderers für den Abtransport und/oder dem Schneidbereich der Profilstation zu Postionieren und nach dem Schnitt abzutransportieren, ist dem Längsförder für den Abtransport eine Vorrichtung (10) zum seitlichen Greifen der Profile (11) zugeordnet, welche zwei in den Schneidbereich des Schneidroboters hineinragende Greifer (27,28) aufweist.

Fig. 2

EP 0 320 611 A2

# Einrichtung zum Schneiden von U-, T-, L-, I-, Flach-oder Wulstprofilen

Die Erfindung betrifft eine Einrichtung zum Schneiden von U-, T-, L-, I-, Flach- oder Wulstprofilen mit unterschiedlichen Abmessungen in einer Profil-Schneidstation, mit einer über dem Schneidbereich angeordneten Führungsvorrichtung für einem Schneidroboter und außerhalb des Schneidbereiches der Profil-Schneidstation in einer Flucht angeordneten Längsförderern, auf deren Auflageelementen die Profile in bzw. aus dem Schneidbereich der Profil-Schneidstation gefördert werden, wobei dem Längsförderer zum Zuführen der Profile Vorrichtungen zum Positionieren und Halten zugeordnet sind und der Schneidroboter sowie die Vorrichtungen zum Postionieren und Halten von einer Steuerung gesteuert werden.

Beim thermischen Bearbeiten mit einem Schneidbrenner werden die langen U-, T-, L-, I-, Flach- oder Wulstprofile auf einem Längsförderer in den Schneidbereich einer Profil-Schneidstation gefördert und im Schneidbereich relativ zu einer senkrecht zur Längsförderstrecke verlaufenden Bezugsebene positioniert. Anschließend werden die im Schneidbereich entland der Längsförderstrecke positionierten Profile in einer am Ende des Längsförderers angeordneten Vorrichtung senkrecht zur Längsförderstrecke positioniert und mit einem Schneidbrenner entsprechend einem in der Steuerung der Profil-Schneidstation abgelegten Schneidbild geschnitten. Dabei fallen beim ersten Schnitt die von den Profilen abgetrennten kurzen Schrotteile in einem zwischen dem Längsförderer für das Zuführen und einem Längsförderer für den Abtransport unter dem Schneidroboter vorhandenen Zwischenraum, in welchem ein Schrottkübel angeordnet ist. Bei den folgenden Schnitten werden die Profile um ein vorgegebenes Maß auf dem Längsförderer für das Zuführen der Profile in Richtung der Profil-Schneidstation so lange verschoben, bis diese mindestens mit einer Hälfte auf dem Längsförderer für den Abtransport aufliegen. Hierdurch wird vermieden, daß die geschnittenen Profilteile in den Zwischenraum fallen.

Aus der DE 3510381 C2 ist es bekannt, die Profile auf einem Rollengang mit Zylinderrollen abzulegen und mit einem über den Zylinderrollen angeordneten Meßwagen um ein vorgegebenes Maß in den Schneidbereich eines Schneidroboters zu fördern. Als Führung der Profile sind senkrecht zu der Auflagefläche des Rollenganges zwischen den Zylinderrollen angeordnete Anlagerollen vorgesehen.

Nach dem zweiten Schnitt wird das auf Maß geschnittene erste Profilteil auf einem Rollengang mit angetriebenen Rollen zu einem Querförderer gefördert.

Gemäß der DE 3331844 C1 und der DE 2742072 A2 erfolgt in einer Bohrstation der Transport der Profile über senkrecht zu den Zylinderrollen angeordnete Vorschubrollen, welche mit Meßvorrichtungen verbunden sind.

Der Erfindung liegt die Aufgabe zugrunde, mit nur einer Einrichtung lange oder kurze Profilteile im Bereich des Längsförderers für den Abtransport und/oder dem Schneidbereich der Profil-Schneidstation zu Positionieren und nach dem Schnitt abzutransportieren.

Diese Aufgabe wird erfindungsgemäß dadurch gelöst, daß dem Längsförderer für den Abtransport eine Vorrichtung zum seitlichen Greifen der Profile zugeordnet ist, welche zwei in den Schneidbereich des Schneidroboters hineinragende Greifer aufweist.

Die mit der Erfindung erzielten Vorteile bestehen im wesentlichen darin, daß durch das seitliche Anklemmen und Halten der Profile vor dem Schneiden die Anschnittstelle für den Gasschneidbrenner genau vorgegeben werden kann. Hinzu kommt, daß die von den Greifern gehaltenen Profile nach dem Schnitt gesteuert aus dem Schneidbereich auf beispielsweise einen Puffertisch abtransportiert werden können. Mit den in den Schneidbereich hineinragenden Greifern wird ein Positionieren und Halten von kurzen Profilteilen mit geringeren Längsabmessungen als der zwischen den Längsförderern vorhandene Zwischenraum möglich; die letzten zu schneidenden Profilteile können zwischen den Greifern positioniert und gehalten werden. Grundsätzlich wird durch die Vorrichtung nach der Erfindung eine größere Flexibilität der Einrichtung zum Profil-schneiden erreicht; so ist es möglich, die Profile im Bereich des Längsförderers für den Abtransport während der Längsförderung mit einem fest angeordneten Greifer zu führen. Hierbei wird der Greifer mit einer an den Längsfördervorschub angepaßten Geschwindigkeit mit dem Profil mitbewegt während das Profil an der Greiferfläche anliegt. Nach dem Positionieren der Profile in Längsförderrichtung werden diese senkrecht zur Längsförderstrecke zwischen den Greifern positioniert und von den Greifern gehalten. In einer anderen Betriebsweise verbleibt der Greifer während der Längsförderung der Profile in der Nähe des Schneidbereiches und führt das zu schneidende Profilteil nur in diesem Bereich. Zum Führen der Profile ist der eine Greifer mit seiner Greiferfläche auf einer Vertikalebene angeordnet, die mit den senkrecht zu den Auflageelementen des Längsförderers für das Zuführen der Profile angeordneten Anlageelementen fluchtet.

Weitere vorteilhafte Ausbildungen der Erfindung sind in den Unteransprüchen angegeben.

Ein Ausführungsbeispiel ist in der Zeichnung dargestellt und wird im folgenden näher beschrieben:

Es zeigen:

Fig. 1 eine Seitenansicht der Vorrichtung zum Greifen der Profile;

Fig. 2 eine Vorderansicht der Vorrichtung,

Fig. 3 eine schematische Darstellung eines U-, I-, T_, Wulst- bzw. Flachprofils.

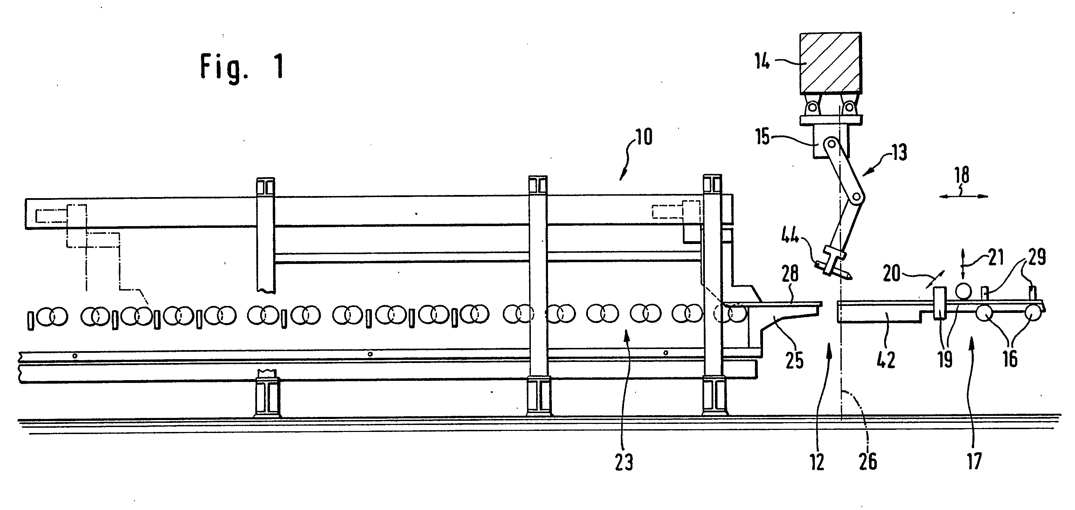

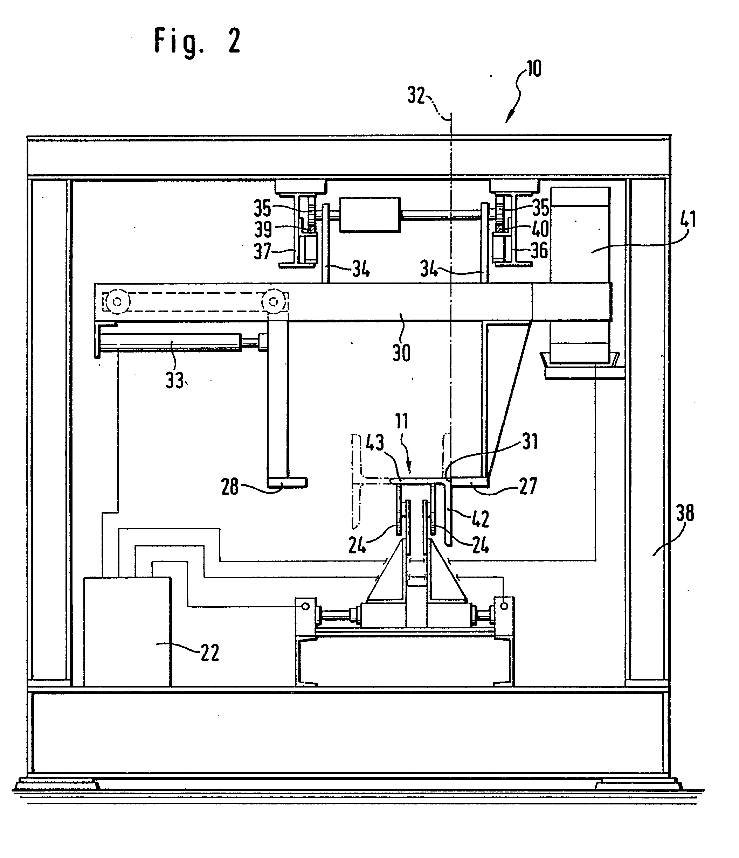

In den Figuren 1 und 2 ist eine Vorder- und Seitenansicht der Vorrichtung 10 zum Greifen der U-, T-, I-, L-, Flach- oder Wulstprofile 11 dargestellt. Die Vorrichtung 10 ist Bestandteil eines Profilschneidsystemes, wie es in der DE 3510381 C2 näher beschrieben ist. In der Fig. 1 ist die aus der DE 3510381 C2 bekannte Profil-Schneidstation in ihrer Gesamtheit mit 13, die Führungsvorrichtung mit 14 und der Schneidroboter mit 15 bezeichnet. Auf den Auflageelementen 16 des Längsförderers 17 werden die Profile 11 in den Schneidbereich 12 der Profil-Schneidstation 13 gefördert und entlang der Längsförderstrecke 18 relativ zu einer im Schneidbereich 12 vorgesehenen Bezugsebene 26 positioniert. Dem Längsförderer 17 ist eine nur schematisch dargestellte Vorrichtung 19 zum Positionieren der Profile 11 senkrecht zur Längsförderstrecke 18 (Pfeilrichtungen 20 und 21) zugeordnet. Die Vorrichtung 19 besteht im wesentlichen aus fest und beweglich angeordneten Anschlag- bzw. Spannelementen, die an dem zur Profil-Schneidstation 13 weisenden Ende des Längsförderers 17 befestigt sind. Entlang der Längsförderstrecke 18 des Längsförderers 17 sind senkrecht zu den Auflageelementen 16 Anlageelemente 29 für die Profile 11 angeordnet. Der Schneidroboter 15, die Vorrichtungen 10 und 19 sowie die Fördermittel zum Fördern der Profile 11 entlang der Längsförderstrecke 18 werden von einer Steuerung 22 automatisch nach Programme gesteuert. In einer Flucht mit dem Längsförderer 17 Für Zuführen der Profile 11 ist außerhalb des Schneidbereiches 12 ein Längsförderer 23 für den Abtransport der mit dem vorzugsweise als Autogen-Schneidbrenner ausgebildeten Schneidbrenner 44 geschnittenen Profilteile angeordnet, dessen Auflageelemente mit 24 bezeichnet sind. Die Auflageelemente 16, 24 der Längsförderer 17, 23 bilden eine auf der gleichen Höhe liegende Auflagefläche für die Profile 11, die durch die Abmessungen des Schneidbereiches 12 unterbrochen ist. Vorteilhaft sind an dem zu der Profil-Schneidstation 13 weisenden Ende des Längsförderers 23 für den Abtransport der Profile 11 in den Schneidbereich 12 kragende Profil-Stützmittel 25, beispielsweise Stütztraversen oder Stützbleche, zum Unterstützen der Profile 11 befestigt. Wie aus der Fig. 2 ersichtlich, ist die Vorrichtung 10 zum seitlichen Greifen der Profile 11 dem Längsförderer 23 für den Abtransport der Profile 11 zugeordnet. Die Vorrichtung 10 weist zwei in den Schneidbereich 12 des Schneidroboters 15 hineinragende Greifer 27,28 auf. Der Greifer 27 ist in Bezug auf seine seitliche Lage, d. h. in seiner Lage senkrecht zur Längsförderstrecke 18, ortsfest an Führungsmitteln 30 befestigt, die über dem Längsförderer 23 angeordnet sind. Hierbei ist die am freien Ende des Greifers 27 vorgesehene Greiferfläche 31 auf der von den Anlageelementen 29 des Längsförderers 17 bestimmten Vertikalebene 32 angeordnet. Der diesem ortsfest angeordneten Greifer 27 gegenüberliegende Greifer 28 ist mit einem von der Steuerung 22 ansteuerbaren Antrieb 33 verbunden. Der Antrieb 33 kann beispielsweise als Stellzylinder ausgebildet sein, mittels dem der Greifer 28 entlang der Führungsmittel 30 senkrecht zur Längsförderstrecke 18 der Profile 11 verstellbar ist. Die senkrecht zur Längsförderstrecke 18 über dem Längsförderer 23 für den Abtransport der Profile 11 angeordneten Führungsmittel 30 bestehen im wesentlichen aus einem Querbalken, der über Halte- und Antriebsmittel 34,35 mit zwei Trägern 36,37 verbunden ist. Die Träger 36,37 verlaufen über dem Führungsmittel 30 entlang der Längsförderstrecke 18. Sie sind an den Längsförderer 23 für den Abtransport und die Führungsmittel 30 überspannenden Portalen 38 befestigt. Die Antriebsmittel 35 der Führungsmittel 30 sind nach einem Ausführungsbeispiel als Antriebsritzel ausgebildet, die mit auf den Trägern 36, 37 angeordneten Zahnstangen 39,40 in Eingriff stehen. Über einen mit der Steuerung 22 verbundenen Antrieb 41 ist das Führungsmittel 30 mit den Greifern 27,28 entlang der Längsförderstrecke 18 bewegbar und automatisch positionierbar.

Im Betrieb wird ein U-, I-, T-, L-, oder Wulstprofil über einen nicht näher dargestellten Querförderer automatisch auf der Auflagefläche der vorzugsweise scheibenförmigen Auflageelemente 16 abgelegt. Das in Fig. 2 dargestellte L-Profil 11 (Winkel-Profil), wird hierbei waagerecht mit auf beiden freien Stirnflächen aufliegender Anordnung zu den scheibenförmigen Auflageelementen 16 des Längsförderers 17 gefördert. Die Querförderung des L-Profiles 11 ist in dem Augenblick beendet, wenn eine Seite 42 des Profiles 11 an den Anlageelementen 29 anliegt. Anschließend wird der Querförderer abgesenkt und das L-Profil 11 wird mit seiner als Flansch ausgebildeten Seite 42 in den zwischen den Anlageelementen 29 und den scheibenförmigen Auflageelementen 16 gebildeten Zwischenraum 29 abgelegt. Danach wird das mit seinem Steg 43 auf den Auflageelementen 16 abgelegte Profil 11 mit seinem Anfang über die senkrecht zur Längsförderstrecke 18 verlaufende Bezugsebene 26 in eine erste Schneidposition gefördert. In dieser Position wird das Profil 11 zwischen den Elementen der Vorrichtung 19 positioniert, wobei die Seite 42 der Profile 11 entlang der durch die Anlageelemente 29 bestimmten Vertikalebene 32 angeordnet ist. Wie aus der Fig. 1 ersichtlich, fällt das beim ersten Schnitt abgetrennte Schrotteil in einem zwischen den Längsförderern 17 und 23 vorhandenen Zwischenraum (Schneidbereich 12), in dem keine Auflageelemente 16, 24 für die Profile 11 angeordnet sind. Anschließend wird das stabförmige Profil 11 um ein vorgegebenes Maß entlang der Längsförderstrecke 18 in eine Schneidposition gefördert, in der ein erstes Profilteil mit dem Schneidbrenner 44 von dem Profil 11 abgetrennt wird. Während das Profil 11 von der Bezugsebene 26 zu dem Längsförderer 23 für den Abtransport gefördert wird, wird die Seite 42 des Profiles 11 von der Greiferfläche 31 des fest angeordneten Greifers 27 geführt. Hierzu ist die Greiferfläche 31 auf der durch die Anlageelemente 29 bestimmten Vertikalebene 32 angeordnet. Bei diesem Fördervorgang ist der auf dem Führungsmittel 30 verstellbare Greifer 28 in einer seitlichen Position zu dem Profil 11 angeordnet, in der er das Profil 11 nicht berührt. Nachdem das Profil 11 um das vorgegebene Maß gefördert und in der Vorrichtung 19 positioniert ist, wird das Profil 11 mit dem bewegbaren Greifer 28 im Bereich seines hinter der Bezugsebene 26 angeordneten Steges 43 an die Greiferfläche 31 des ortsfesten Greifers 27 angelegt und durch diese Maßnahme das Profil positioniert. Der Schneidbrenner 44 wird dann auf eine programmierte Anschnittstelle gestellt und das Profilteil an der Anschnittstelle auf die Schneidtemperatur erhitzt und anschließend mit einem Schneidsauerstoffstrahl geschnitten. Nachdem das zwischen den Greifern 27,28 gehaltene Profilteil von dem Profil 11 abgetrennt ist, wird es mit den Greifern 27,28 entlang der Längsförderstrecke 18 zu einer Abwurfstelle transportiert.

Die Arbeitsweise der Vorrichtung 10 wurde im vorstehenden Ausführungsbeispiel anhand eines L-Profiles beschrieben, das mit einem Autogen-Schneidbrenner geschnitten wurde. Selbstverständlich können mit der Vorrichtung 10 auch die U-, I-, T-, Flach- oder Wulstprofile geführt, positioniert, gehalten und transportiert werden. Auch können die Profile mit anderen Schneidbrennern, beispielsweise Plasmaschneidbrennern geschnitten werden.

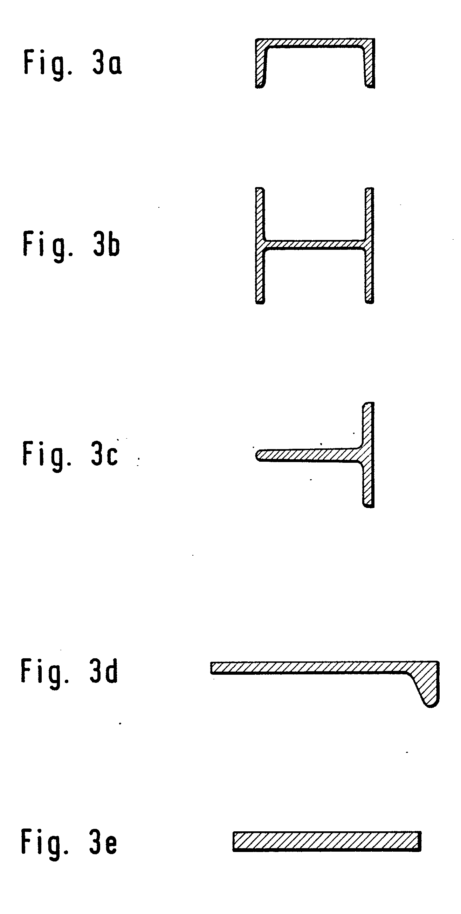

Die vorstehend genannten Profile sind in den Figuren 3a, b, c, d, e schematisch dargestellt, wobei Fig. 3a ein U-Profil, Fig. 3b ein I-Profil, Fig. 3c ein T-Profil, Fig. 3 d ein Wulst-Profil und Fig. 3e ein Flach-Profil zeigt.

## Ansprüche

1. Einrichtung zum Schneiden von U-, T-, L-, I-, Flach-oder Wulstprofilen (11) mit unterschiedlichen Abmessungen in einer Profil-Schneidstation (13), mit einer über dem Schneidbereich (12) angeordneten Führungsvorrichtung (14) für einen Schneidroboter (15) und außerhalb des Schneidbereiches (12) der Profil-Schneidstation (13) in einer Flucht angeordneten Längsförderern (17,23), auf deren Auflageelementen (16,24) die Profile in bzw. aus dem Schneidbereich (12) gefördert werden, wobei dem Längsförderer (17) für das Zuführen der Profile Vorrichtungen (19) zum Positionieren und Halten der Profile (11) zugeordnet sind und der Schneidroboter (15) sowie die Vorrichtungen (19) zum Positionieren und Halten der Profile (11) von einer Steuerung (22) gesteuert werden,
dadurch gekennzeichnet,
daß dem Längsförderer (23) für dan Abtransport der Profile (11) eine von der Steuerung (22) steuerbare Vorrichtung (10) zum seitlichen Greifen der Profile (11) zugeordnet ist, welche zwei in den Schneidbereich (12) des Schneidroboters (15) hineinragende Greifer (27,28) aufweist.

2. Einrichtung nach Anspruch 1,
dadurch gekennzeichnet,
daß einer der Greifer (27) in Bezug auf seine seitliche Lage ortsfest an Führungsmitteln (30) befestigt ist und mit der Greiferfläche (31) an seinem freien Ende auf einer von senkrecht zu den Auflageelementen (16,24) entlang mindestens eines Längsförderers (17,23) angeordneten Anlageelementen (29) bestimmten Vertikalebene (32) angeordnet ist.

3. Einrichtung nach Asnpruch 1 oder 2,
dadurch gekennzeichnet,
daß der dem ortsfest angeordneten Greifer (27) gegenüberliegende Greifer (28) mit einem von der Steuerung (22) ansteuerbaren Antrieb (33) zur Bewegung senkrecht zur Längsförderstrecke (18) der Profile (11) verbunden ist.

4. Einrichtung nach einem der Ansprüche 1 bis 3,
dadurch gekennzeichnet,
daß die Greifer (27,28) im Bereich der Profilstege (43) an die Profile (11) anlegbar sind.

5. Einrichtung nach einem der Ansprüche 1 bis 4,
dadurch gekennzeichnet,
daß beide Greifer (27,28) entlang der Längsförderstrecke (18) des Längsförderers (23) für den Abtransport bewegbar und von der Steuerung (22) positionierbar sind.

6. Verfahren zum Schneiden von U-, T-, L-, I-, Flachoder Wulstprofilen, welche mit den Profilstegen (43) auf den Auflageelementen (16) eines Längsförderers (17) für das Zuführen der Profile (11) abgelegt und mit einer Seite (42) an senkrecht zu den Auflageelementen (16) angeordneten Anlageelementen (29) angelegt werden, welche mit einer Vorrichtung in den Schneidbereich des Schneidroboters gefördert und entlang der Längsförderstrecke (18) relativ zu einer im Schneidbereich (12) vorgegebenen Bezugsebene (26) positioniert werden und in einer außerhalb des Schneidbereiches (12) angeordneten Vorrichtung in der zur Längsförderstrecke senkrechten Ebene positioniert und gehalten werden und in dieser Position die Profile geschnitten werden,

dadurch gekennzeichnet,

daß vor dem Profilschnitt die Profile (11) mit einem bewegbaren Greifer (28) im Bereich ihrer hinter der Bezugsebene (26) angeordneten Stege (43) an die Greiferfläche (31) des ortsfesten Greifers (27) angelegt werden.

7. Verfahren nach Anspruch 6,

dadurch gekennzeichnet,

daß nach dem Profilschnitt die Greifer (27,28) mit den geschnittenen Profilteilen entlang der Längsförderstrecke (18) zu einer Abwurfstelle bewegt werden.

Fig. 1

# Fig. 2

Fig. 3a

Fig. 3b

Fig. 3c

Fig. 3d

Fig. 3e